# EUROPEAN PATENT SPECIFICATION

(11) **EP 3 955 395 B1**
(45) Date of publication and mention of the grant of the patent: **13.12.2023**
(21) Application number: 21187697.4
(22) Date of filing: 26.07.2021
(51) Int. Cl.: H01R 13/629, H01R 13/52

(54) **CONNECTOR ASSEMBLY WITH SEALED SYMMETRICAL SPLIT LEVER**
VERBINDERANORDNUNG MIT EINEM ABGEDICHTETEN SYMMETRISCHEN GETEILTEN HEBEL
ENSEMBLE CONNECTEUR AVEC LEVIER À FENTE SYMÉTRIQUE ÉTANCHE

(30) Priority: 11.08.2020 GB 202012509
(43) Date of publication of application: 16.02.2022
(73) Proprietor: Aptiv Technologies Limited, St. Michael (BB)
(72) Inventor: Dobernig, Norbert, D-90478 Nuremberg (DE); Schmidt, Rainer, D-90411 Nuremberg (DE); Ramakrishnan, Prasanna, Chennai-600117 Tamilnadu (IN); Manne, Ramakrishna, Guntur-522257 Andhra Pradesh (IN)
(74) Representative: Murgitroyd & Company

(56) References cited:
- WO-A1-2004/012305
- WO-A1-2005/101583
- WO-A1-2010/070395
- DE-A1- 19 611 873
- JP-U- H0 548 246
- US-A- 5 252 084
- US-A- 5 417 513

## Description

### Field

The present application relates in general to a connector assembly and in particular to a connector assembly for automotive applications comprising a pivotable lever to assist in the mating of a connector housing with a corresponding counter connector housing.

### Background Of The Invention

Modern vehicles comprise a host of devices distributed over the entire vehicle. Electrical connectors, such as door to body connectors, may be used to connect electrical components placed in car doors such as door locks, door airbags etc to corresponding control electronics. In general, connectors placed at a junction between the car body and the car door of the vehicle are subject to rigorous environmental demands. In particular, due to the increasing complexity and importance of electronics which must be connected throughout the mentioned junction, a demand exists for providing reliable waterproof and dustproof connector assemblies, in particular for more reliable waterproof and dustproof door to body connector assemblies.

Traditionally slider connectors have been used for these type of door to body connections such as those described in EP2656449. However, these connectors require a substantial force in order to mate the connector housings together, which may increase the complexity of the assembly process and further increase the risk that connector housings are incorrectly assembled potentially causing them to malfunction during operation. Furthermore, the connector assembly of EP2656449 does not provide any means for checking that the connector housings have been correctly connected. As such, unless the appropriate force is applied, which is difficult to gauge without the use of specialised instruments, there is a risk that the connector may become loose and disconnected during operation.

Connectors with a mate assist function have been developed in order to reduce the force required to mate connector housings together. This mate assist function is often in the form of a lever, wherein one of the connector housings is moved towards the other connector housing through means of a rotating lever which actuates a cam type member action within the two connectors.

As these connectors are used in an outdoor environment, it is necessary to provide a connector which is both waterproof and dustproof, and thus a sealing arrangement is also required which does not hinder the rotational movement of the lever. The method of installing the lever on the connector and method of rotating the lever must not negatively affect the performance of the sealing member. It is widely acknowledged that U shaped levers are difficult to install as the lever must be sufficiently rigid to withstand the force required to activate the mate assist function with the rotation of the lever but the lever must also be sufficiently flexible to be securely fitted to the connector - in an activity which often involves the resilient deformation of parts of the lever.

Levers which are made up of several components and which are assembled together into a lever on the connector have thus been developed in an effort to overcome some of these prior art issues.

Prior art document US5252084 discloses a connector of male and female interlocking terminals, wherein a lever is provided on a first connector in a freely pivoting manner. Guide pins provided on a second connector are inserted to guide groove holes and the lever is operated to pull together and connect the second and first connectors. The lever is made of multiple parts of various geometries. As such, the use of multiple parts may lead to confusion, and potentially incorrect orientation, during the assembly of the lever on the connector. In addition, each of these parts must be separately manufactured and then provided in a kit with the other parts, which is burdensome in terms of manufacturing resources. Furthermore, the connector assembly is not provided with a sealing function, in particular there is no seal between the lever and the connector housing, As such, the connector assembly is subject to moisture and dust entering the connector housing, thus substantially compromising the reliability of the connector.

Prior art document US5417513 discloses a lever type connector including a lever, a first connector and a second connector to be connected to each other. Two pins formed on the first connector are inserted through the through-opening formed on each of two separate components of the lever. Then, the two components are connected to each other by, for example, an automatic ultrasonic welding device, so that it is unnecessary to resiliently deform one of the components of the lever in installing the components on the first connector in contrast to the conventional method. This lever does however require a further connecting means (such as welding) in addition to the actual assembly of the lever. As such, specialised equipment may be required, which would increase the complexity and time taken for the connector assembly. Furthermore, depending on the skill and type of welding used for connecting the levers, this type of assembly may lead to weak connection between the lever arms, which may break during use. The connector assembly provided in US5417513 is not provided with a sealing function between the lever and the connector housing, As such, the connector assembly is subject to moisture and dust entering the connector housing, thus substantially compromising the reliability of the connector.

Document WO 2005101583 A1 discloses a plug-in connection for producing at least one electric connection that runs through an opening in a dividing wall. Said plug-in connection comprises a first and a second connector, which can be interconnected and at least one of said connectors can be sealed in relation to the dividing wall by means of a seal that surrounds the opening. The invention relates in particular to a plug-in connection, at least one of the connectors of said connection comprising a clamping device, which can be engaged with the other connector and which enables the two connectors to be clamped with the dividing wall in a permanent manner in their connection direction. The invention also relates to a mounting method for producing an electric plug-in connection of this type.

Document WO 2010070395 A1 discloses a connector arrangement comprising a connector housing (30) and a pivotable lever mountable on the housing to assist in the mating process of the connector housing with a corresponding counter-connector. The pivotable lever comprises first and second halves in the form of separate lever arms each having coupling means adapted to mechanically connect the two halves with each other.

Document WO 2004012305 A1 discloses an electrical connector assembly is provided including first and second housings having ends configured to receive electrical contacts. The first and second housings are configured to be matable with one another to join corresponding electrical contacts. The electrical connector assembly includes a lever member having a cam arm received by the first housing and engaging the second housing as the lever member is rotated through a range of motion from an insertion position to an engaged position. The lever member connects the first and second housings to join corresponding electrical contacts when the lever member is rotated to the engaged position. The lever member has a position assurance tab received by a catch in the first housing.

Document JPH 0548246 U discloses a connector including a pair of housings that are fitted to each other, and one housing is a housing body and the same. An operating member having a cam groove formed in an arc shape while being undulating and rotating at a predetermined angle around a rotating shaft on the housing body and being urged in an upright direction to be pivotally supported, and the operating member in an inverted state. The housing body is provided with a locking means for locking, and the other housing is a locking that unlocks the locking means only when the other housing and the one housing are fitted to a predetermined position. A release means and a cam slave that engages with the cam groove are provided, and the cam groove extends from the receiving portion in an arc shape and receives the receiving portion that receives the cam slave when the operating member stands up. The connector having a gradual reduction portion in which the distance from the rotation shaft gradually decreases as the distance from the portion increases.

Document DE 19611873 A1 discloses a device that connects two housing parts for an electric plug connection. Two opposing pins are respectively arranged in the region of the two long sides or ends of one of the housing parts. Locking brackets are pivotally mounted in the region of the long sides or ends of the other housing part. The locking bracket has a grip part and a holder arrangement. When the two housing parts are locked, the holder arrangement lies in form fitting arrangement on the pins. By means of the grip part the holder arrangement is pivotal into a rest position which releases the lock. The grip part is divided into two sections such that the two holders of one locking bracket are movable independent of each other from their active position to their rest position or vice-versa. The grip part may be divided in the middle with the distance of the two sections being such that they can be actuated together.

Whilst there has been a lot of development in the field of electric connectors, including the development of various lever configurations to improve performance, it is clear that problems such as lack of mate assist robustness, difficulty of use, difficultly in assembling the components of the connector or lever, complexity of manufacturing and maintaining the integrity of the internal space of the connector through means of a seal should be addressed in order to develop the next generation of electrical components connectors.

### Summary

The present invention provides a connector assembly as detailed in claim 1. Also provided is a method according to claim 15. Advantageous features are provided in the dependent claims. It is the aim of the present disclosure to improve the overall approach to electrical component connectors particularly in terms of manufacturing, overall ease of use and integrity of connection.

According to a first aspect of the present disclosure there is provided a connector assembly comprising;
a connector housing adapted to engage with a corresponding counter connector housing;
a lever comprising a first lever arm and a second lever arm, each lever arm comprising interlocking means for connecting the first lever arm to the second lever arm at a first location, wherein the first lever arm and the second lever arm are identical,
each lever arm comprising at a second location a first mounting member configured to cooperate with a complementary second mounting member on the connector housing for pivotably and sealingly mounting each lever arm to a corresponding location on the connector housing;
wherein the interlocking means of each of the first lever arm and the second lever arm are configured to define complementary symmetrical surfaces that interlock with one another when the lever arms are pivotably mounted to the connector housing and, wherein on mounting the lever arms to the connector housing, the lever is configured to move about the connector housing between an open state and a closed state to secure the counter connector to the connector housing.

According to embodiments of the present disclosure, a sealing member is provided in sealing contact with corresponding sealing surfaces on the lever arms and the connector housing.

According to embodiments of the present disclosure, the sealing member is integrally formed on each of the lever arms and/or the connector housing.

According to embodiments of the present disclosure, the sealing member is formed using a 2K injection molding process.

The connector assembly of the present disclosure provides by means of a split lever, a mate assist function for securing the connector housings to one another. The split lever may be formed by connecting two lever arms provided with substantially symmetrical interlocking means that are arranged to interconnect with one another when the lever arms are mounted on the connector housing. For example, two symmetrical levers, which may be substantially identical to one another, may be used to form the lever. As such, the connector assembly of the present disclosure requires a reduced number of different parts, which would simplify the manufacture as well as the assembly process. The connector assembly as described above is protected from dust and moisture when the pivotable lever is in both a static and dynamic state. Providing symmetrical levers may be beneficial in that they can be mass produced, thus lowering production cost. As the lever arms are symmetrical, there is no question of confusion as to how to orient the levers or which lever to use in which location, thus easing the burden of installation of the connector. As the lever comprises two parts which are assembled first to the connector and then interconnected to each other, the risk of inadvertently damaging the seal on installation is greatly reduced. As the seal is a 2k molded seal, which is produced as part of the manufacturing process of the connector housing, there is no parting line which increases the integrity of the seal. Furthermore, because the lever is made of two separate lever arms, it is possible to manufacture the lever arms without a parting line. As such, the sealing function of the lever, when mounted on the connector housing may be greatly improved.

According to embodiments of the present disclosure, the connector housing comprises two apertures provided on opposing sides of the connector housing, each aperture configured to receive a locking member of a lever arm.

According to embodiments of the present disclosure, the locking member comprises a locking element which is configured to cooperate, when the lever moves to the closed position, with a mating surface of the counter connector housing to secure the counter connector housing to the connector housing.

According to embodiments of the present disclosure, the locking element is in the form of a gear comprising at least one gear tooth configured to engage with a recess on the counter connector.

According to embodiments of the present disclosure, the first and second mounting members comprise one of a retaining latch and a notch adapted to cooperate with one another for mounting each lever arm to opposing locations on the connector housing. The retaining latch may be provided with a catching member, which is configured to engage with a surface of the notch when the lever is mounted on the connector housing thus securely mounting the lever to the connector housing.

According to embodiments of the present disclosure, the notch defines a substantially circular rim configured to engage with a corresponding retaining latch. The rim may be provided around the corresponding apertures provided on the connector housing. The rim may be continuous or discontinuous, and greatly reduces the risk of a lever being accidentally disengaged from the connector housing while pivoting between the open and the closed states.

The connector as described above benefits from a mate assist function in that the gear enables the counter connector to be moved into the connector when the lever is rotated. Due to the split nature of the lever, as the lever is installed on the connector in parts, the requirement for flexibility in the body of the lever is greatly reduced, as such, it is possible to apply more force to the lever, without risk of lever or cam breakage, as the lever may be manufactured from more robust materials.

According to embodiments of the present disclosure, the counter connector housing comprises an engagement surface adapted to cooperate with a corresponding engagement surface on the connector housing or the locking member of a lever arm. For example, the corresponding engagement surface may comprise one of at least one boss and an opening. For example, one or more bosses may be provided on the counter connector housing that may be adapted to cooperate with corresponding mating surfaces on the connector housing and/or the locking member of the lever. The corresponding mating surfaces may be in the form of an opening, a lip, a rim, a notch, and the like.

According to embodiments of the present disclosure, the interlocking means (8) of each lever arm comprise a locking element and a guiding element.

According to embodiments of the present disclosure, the guiding element comprises a protruding elongate member and a corresponding slot configured for receiving an elongated member of the other lever arm.

According to embodiments of the present disclosure, wherein the locking element comprises a protruding locking member and a corresponding resilient member which defines a locking aperture configured for receiving and securing a protruding locking member (36) of the other lever arm.

The use of a locking and guiding elements on the interlocking means ensure ease of assembly and further ensures that risk of becoming disengaged, once the lever arms are mounted on the connector housing, is greatly reduced.

According to embodiments of the present disclosure, the lever comprises first connecting means configured to cooperate with corresponding second connecting means on the connector housing for releasably securing the lever on the connector housing ,when the lever is in the closed position, wherein the first connecting means and second connecting means comprise interconnecting elements configured to engage with one another.

The connector assembly of the present disclosure further provides connecting means on the connector housing and the lever, which are configured to be engaged when the lever is in the closed position. As such, they prevent the lever from accidentally pivoting from the closed position to the open position. Preferably, when the first and second connecting means become engaged, an audible sound may be generated, indicating that the first and second connecting means have engaged. As such, the present disclosure ensures that the risk of not fully rotating the lever to the closed position during assembly is substantially reduced.

According to embodiments of the present disclosure, the connector assembly comprises a connector position assurance (CPA) member, the CPA member being movable from a start position to an end position, wherein at the end position the CPA member prevents the latching means from disengaging.

The CPA feature of the present disclosure is advantageously provided to further enhance the connection of the first and second connecting means provided on the connector housing and the lever. The lever as disclosed above benefits from a CPA member which ensures that once the lever is in position; the lever cannot be accidentally rotated thus causing components of the connector assembly to become disengaged. As a result, the closed position, and thus the engagement of the connector housing with the counter connection housing, is assured.

According to embodiments of the present disclosure, the interlocking means of the first lever arm and the second lever arm are symmetrically arranged about a central axis of rotation of the lever.

According to embodiments of the present disclosure, the lever arms are made of a glass fiber-reinforced thermoplastic material comprising between 20.0% to 50.0% of fiber content.

As the lever arms are separately mounted on the connector housing, the flexibility requirements of the lever are greatly reduced. As such, the lever arms may be made of a glass fiber reinforced thermoplastic material comprising between 20.0% to 50.0% fiber content. For example, the glass fiber content may comprise at least 30.0% fiber content.

According to a second aspect of the present disclosure, a method for assembling an electrical connector is provided. The electrical connector comprising a connector housing, a corresponding counter connector housing, and a lever comprising a first lever arm and a second lever arm which are identical, each lever arm comprising interlocking means for connecting the first lever arm to the second lever arm at a first location, wherein the first lever arm and the second lever arm are identical, the method comprising the steps of:
o Presenting the first lever arm and the second lever to the connector housing on opposite sides thereof;
o Biasing the interlocking means of each arm towards the interlocking means of the other arm to effect an interlock of the first and second arms, the interlock effecting a sealed connection of the lever arms to the connector housing;
o Engaging the connector housing with the corresponding counter connecting housing;
o Pivoting the lever relative to the connector housing to effect a locking of the connector housing with the corresponding counter connecting housing.

According to embodiments of the present disclosure, the method for assembling the electrical connector comprises the step of activating the mate assist function comprises rotating the lever to the closed position until an audible sound is generated from the engagement of corresponding connecting means provided on the lever and the connector housing.

The provision of a split symmetrical lever according to embodiments of the present disclosure allows for a less complex manufacturing process to be employed. More specifically, each lever arm of the lever may be manufactured using a single mold. As such, no parting line is formed on the sealing surface of the lever arms. The absence of a parting line on the sealing surface substantially increases the sealing contact with the sealing member and thus enhances the reliability of the connector. The lever arms are identical, and as such only one mold needs to be provided, which significantly reduces the cost and complexity of the manufacturing process.

### Brief Description Of The Drawings

The following drawings are provided as an example to further explain and describe various aspects of the present disclosure:
Figure 1 illustrates a perspective view of a sealed electrical connector assembly with a symmetrical split lever according to an embodiment of the present disclosure;
Figure 2 illustrates a perspective view of a lever arm according to an embodiment of the present disclosure;
Figure 3a illustrates a perspective view of an interlocking means of the lever arm;
Figure 3b illustrates a perspective view of an alternative embodiment of the interlocking means of the lever arm;
Figure 4 illustrates a perspective view of the symmetrical split lever in the interlocked position;
Figure 5 illustrates a perspective view of a connector housing;
Figure 6a illustrates a perspective view of the first lever arm, the second lever arm and the connector in the unassembled position;
Figure 6b illustrates a perspective view of the first lever arm and second lever arm which are interlocked to form a lever and mounted on the connector housing;
Figure 7a illustrates a perspective view of the interlocking means in the interlocked position;
Figure 7b illustrates a perspective cross section view of a gear tooth engaged with a protruding surface of the connector housing 2 in the pre lock position;
Figure 7c illustrates a perspective cross section view of a retention feature in the form of an elongate arm and corresponding rim;
Figure 7d illustrates a perspective cross section view of the lever to connector housing mounting means;
Figure 8a illustrates a perspective view of a sealed electrical connector assembly in an unmated configuration wherein the counter connector housing has not been inserted into the connector housing;
Figure 8b illustrates a perspective view of a sealed electrical connector assembly in a mated configuration wherein the counter connector has been inserted into the connector housing;
Figure 9a illustrates a perspective cross section view of a boss of the counter connector and a corresponding mating surface;
Figure 9b illustrates a perspective cross section view of the boss which is engaged in an internal mating surface of a gear member;
Figure 10a illustrates a perspective view of a sealed electrical connector assembly with a symmetrical split lever wherein the CPA member is in the pre lock position;
Figure 10b illustrates a perspective view of a sealed electrical connector assembly with a symmetrical split lever wherein the CPA member is in the lock position;
Figure 11a illustrates a perspective cross section view of a CPA member and a corresponding element in the connector housing in a pre-lock position;
Figure 11b illustrates a perspective cross section view of the CPA member and the corresponding element in the connector housing in a lock position;
Figure 12a illustrates a perspective cross sectional view of first connecting member of the lever which is engaged by a second connecting member of the connector housing;
Figure 12b illustrates a perspective cross sectional view of the first connecting means of the lever which is engaged at an intermediate position with the connector housing;
Figure 12c illustrates a perspective cross sectional view of the first connecting means of the lever which is engaged with the second connecting means of the connector housing, which in turn is engaged with the CPA member.
Figure 12d illustrates a further perspective cross sectional view of the three engaged elements of Figure 12c;
Figure 12e illustrates a further perspective cross sectional view of the three engaged elements of Figures 12c and 12d; and
Figure 13 illustrates an enlarged perspective cross sectional view of the gear when the lever is in the final-lock position such that the gear tooth engages with a recess on a mating surface of the connector housing.

### Detailed Description Of The Drawings

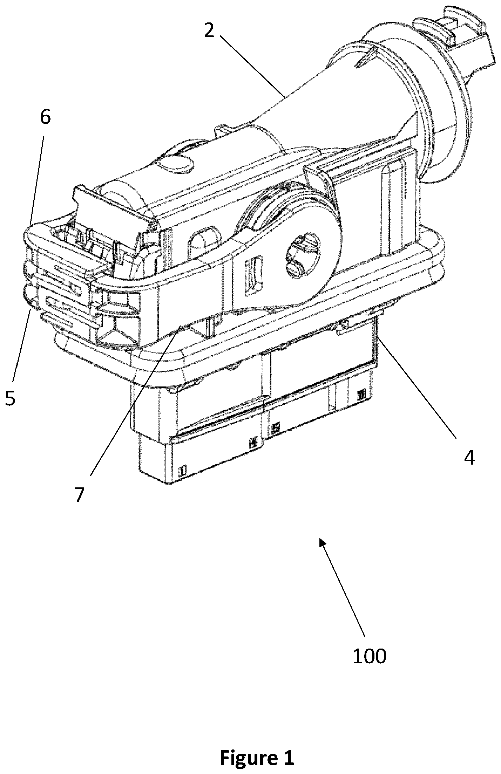

Referring now to Figures 1 - 13 of the accompanying drawings, there is illustrated an example of an electrical connector assembly with symmetrical split lever 5, generally indicated as 100, which is designed to easily and efficiently connect and secure two electrical components in an environment which may be subject to dust and moisture. The electrical connector 100 may be used as a door to body connector in automotive applications.

As shown in Figure 1, the connector assembly 100 comprises a connector housing 2 and a counter connector housing 4 which may engage together in a male-female connection. More particularly, the connector housing 2 may comprise a female connector housing and the counter connector housing 4 may comprise a male connector housing.

The connector assembly 100 is provided with a two-part lever 5. The lever 5 comprises a first lever arm 6 and a second lever arm 7, wherein the lever arms 6,7 may be provided with symmetrical features. For example, the lever arms 6, 7 may be provided with interlocking means 8 comprising symmetrical complementary surfaces. The lever arms 6,7 may be made from the same mould or made on the same manufacturing line. The lever arms 6,7 are be substantially identical, and as such may be interchangeable with one another. It should be appreciated that the term substantially identical implies that the lever arms 6,7 are identical in terms of relevant technical features but may comprise negligible irrelevant dissimilarities which do not affect the functioning of the lever arms 6,7 such as for example manufacturing imperfections etc. As shown in Figure 1, the lever arms are pivotably mounted on opposing sides of the connector housing 2.

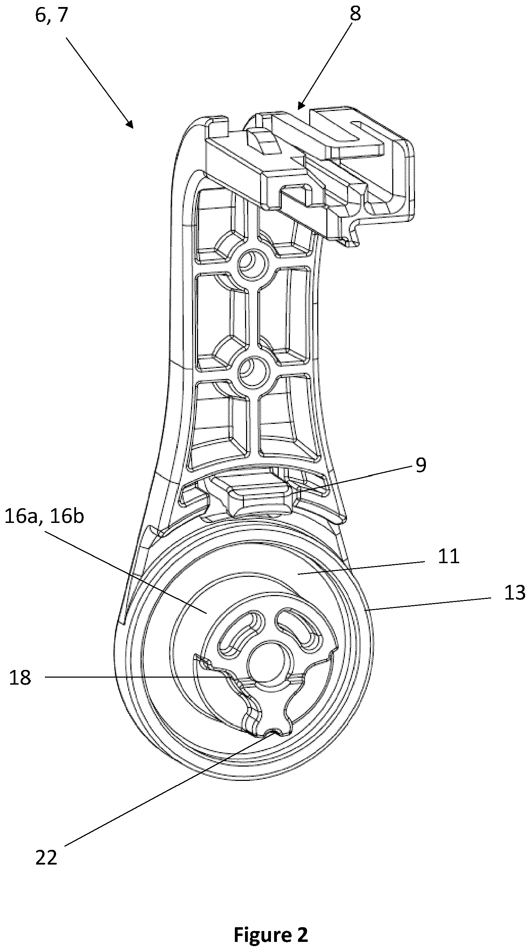

As shown in Figure 2, each lever arm 6,7 comprises an interlocking means 8 which may be located at an end of the lever arm 6,7 and a mounting means 10 which may be located at an opposite end of the lever arm 6,7. The interlocking means 8 of the lever arms 6 and 7 comprise symmetrical features which form complementary interlocking surface that are configured to interlock with one another when the lever arms 6 and 7 are connected. For example, the interlocking means 8 of the first lever arm 6 interlock with the interlocking means 8 of the second lever arm 7 when the lever arms 6,7 are arranged about a central axis of rotation of the lever 5, in other words, when both the interlocking surfaces are in contact with each other. Each interlocking means 8 may comprise a guiding element 30 and a locking element 28.

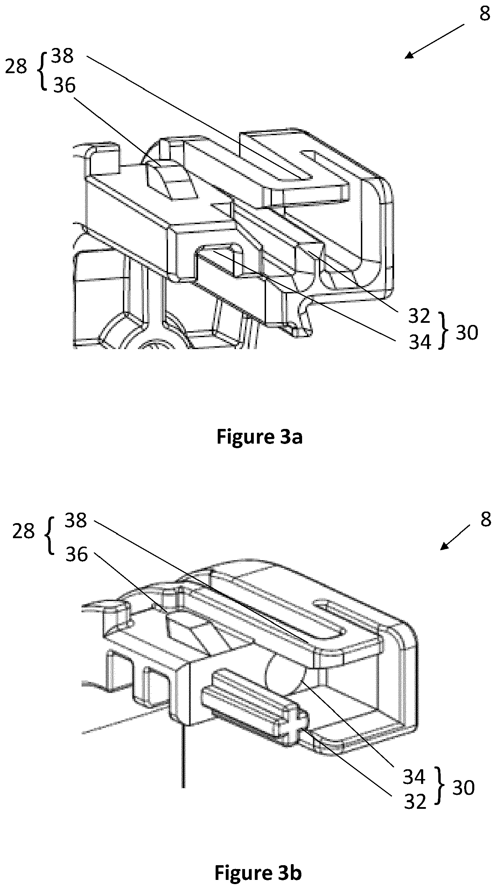

The guiding element 30 comprises a protruding elongate member 32 and a corresponding slot 34. As the protruding elongate member 32 comprises a major longitudinal axis which is parallel to the direction in which the interlocking means 8 are pushed together, the protruding elongate member 32 ensures the correct alignment of the two interlocking means 8. In use, the protruding elongate member 32 of the first lever arm 6 moves into the corresponding slot 34 of the second lever arm 7, and in parallel the protruding elongate member 32 of the second lever arm 7 moves into the corresponding slot 34 of the first lever arm 6. It will be appreciated that the protruding elongate member 32 and corresponding slot 34 may be configured in a variety of geometries for example two alternative forms for the guiding element 30 are illustrated in Figure 3a and 3b. The guiding element 30 in Figure 3a comprises a protruding elongated member 32 of square cross section and a slot 34 in the form of a substantially square aperture in a contacting surface of the guiding element 30. The guiding element 30 of Figure 3b comprises a protruding elongated member 32 in the form of a cruciform extrusion and a slot 34 in the form of a substantially circular hole in the contacting surface of the guiding element 30.

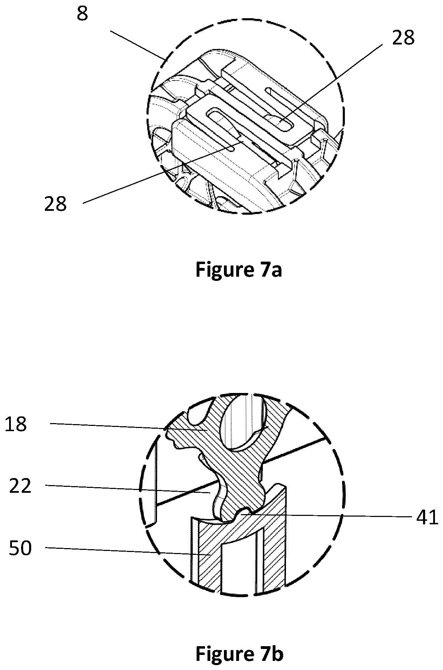

The locking element 28 of the interlocking means 8 may also be provided with protruding locking member 36 and a resilient member 38 which defines a locking aperture. The guiding means 30, depending on their positions on the interlocking means 8, may be activated prior to the activation of the locking element 28. The resilient member 38 may be configured for providing a locking aperture. In use, the resilient member 38, may be adapted to resiliently deform in order to allow the resilient member 38 to slide over the protruding locking member 36, so that the protruding locking member 36 engages with the aperture defined in the resilient member 38. An example of the interlocked configuration of the first lever arm 6 and the second lever arm 7 is shown in Figure 7a.

As shown in Figure 2, each lever arm 6 and 7 may be provided with a first mounting member 9, which is configured to cooperate with a complementary second mounting member 10 provided on the connector housing 2. For example, the first mounting means 9 may be a retaining member e.g. in the form of a retaining latch, which is configured to cooperate with a complementary second mounting member 10 provided on corresponding mounting locations on the connector housing 2. The second mounting means 10 may be in the form of a notch 26 that defines a rim 31 on the mounting locations of the connector housing 2. The notch 26 may be in the form of an indentation that defines a channel. The notch 26 is configured to cooperate with the retaining latch 9 of the corresponding lever arm 6 and 7. The second mounting means 10 may be provided in any other desirable form e.g. an opening adapted to engage with a corresponding retaining latch. It should also be noted that in the context of the present application, the first and second mounting means 9 and 10 are interchangeable. As such the second mounting means 10 may be provided on the lever arms 6 and 7 and the first mounting means 9 may be provided on the corresponding mounting locations on the connector housing. Each lever arm, 6 and 7, may be provided with corresponding locking member 16a and 16b comprising a gear mechanism 18 provided with at least one gear tooth 22. The locking members 16a and 16b may have a desired shape e.g. cylindrical shape. As shown in Figure 2, the gear mechanism 18 may be symmetric about an axis of rotation of the lever 5. As shown in Figure 2, the sealing surface 11 may be provided around the locking members 16a and 16b. The sealing surface 11 may be surrounded by a raised edge 13 defining a space.

The lever arms 6, 7 are be identical, and as such may be interchangeable with one another, which eliminates the potential for confusion with regards to how the levers arms 6,7 are connected and how they should be orientated on the connector housing (2).

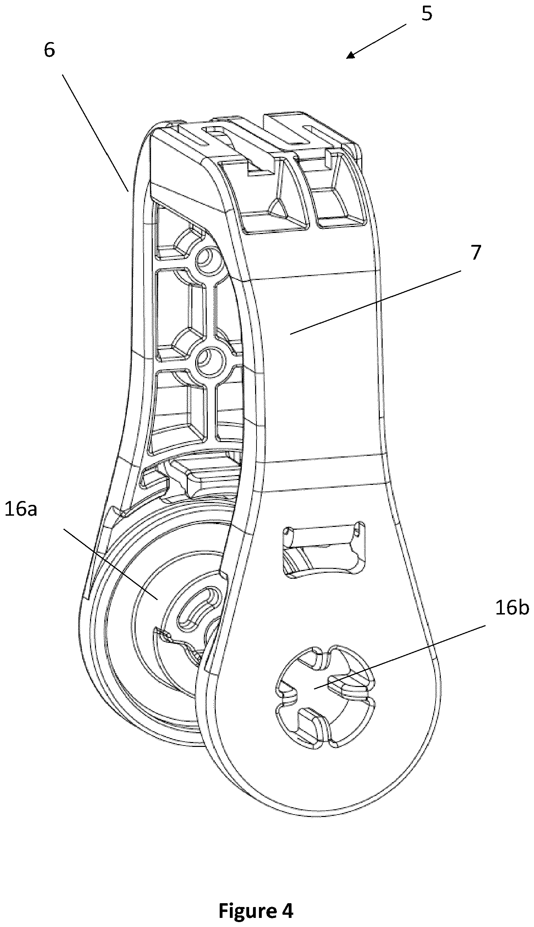

Figure 4 illustrates a view of the first lever arm 6 interlocked with the second lever arm 7 such that they form a U-shaped lever 5. It will be appreciated that, this figure shows the lever arms 6 and 7 in the interlocked state without the connector housing 2 for illustrative purposes, however, in use, the first lever arm 6 may be assembled directly onto the connector housing 2 prior to being interlocked with the second lever arm 7.

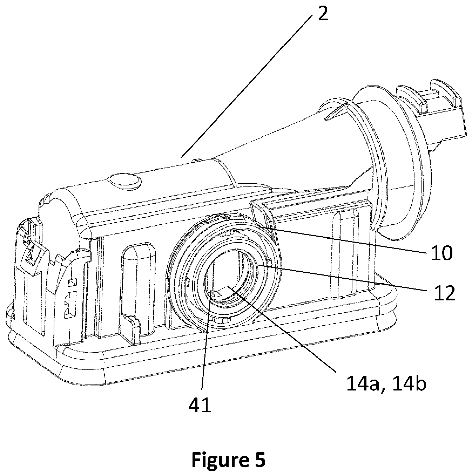

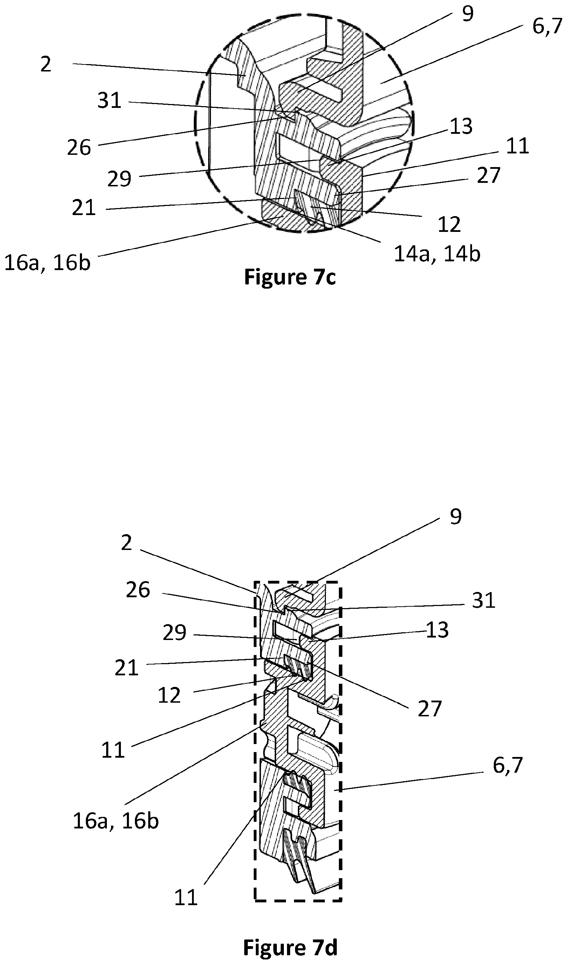

As shown in Figure 5, the connector housing 2 may be provided with two apertures 14a and 14b on opposing sides. Each aperture 14a and 14b is configured to receive a cylindrical locking member 16a and 16b. Around each aperture 14a and 14b, a sealing surface 21 may be provided with a raised edge 27 for receiving a sealing member 12. The sealing member 12, may be provided in sealing contact with corresponding sealing surfaces 11 and 21 on each of the lever arms 6 and 7 and the connector housing 2 as shown in Figure 7c and 7d. According to the embodiment shown in Figures 7c and 7d, the raised edge 13 of the sealing surface 11 is configured to be received, when the levers 6 and 7 are mounted on the connector housing 2, at corresponding openings 29 on the connector housing 2, and the raised edge 27 is configured to be received together with the sealing member 12 at the space defined by the raised edge 13. As such, when the lever 5 is mounted on the connector housing 2, water and dust are prevented from entering the connector housing 2. The sealing member 12 may be integrally formed on one of the sealing surfaces 11 and 21 e.g. using a 2K injection moulding process. Furthermore, the sealing member 12 may be provided in the form of an independently O ring seal. In use, the sealing member 12 is positioned between each lever arm 6 and 7 and the connector housing 2 such that it prevents moisture and dust from entering the interior of the connector housing 2. As shown in Figures 5 and 7c the sealing member 12 may be provided at locations around the apertures 14a and 14b. As shown in Figure 5 and 7d, the second mounting member 10, which is configured to cooperate with the first mounting member 9 of a lever arm 6 and 7, may be in the form of a notch 26 defining a rim 31 provided substantially around each aperture 14a and 14b. As shown in Figure 7c and 7d, the notch 26 is configured to engage with a corresponding engagement surface of the retaining latch 9 of a lever arm 6 and 7. Once the retaining latch 9 is engaged, the notch 26, is configured to retain the retaining latch 9 within the channel, due to the profile of the retaining latch 9, as the lever 5 rotates between the open and closed states.

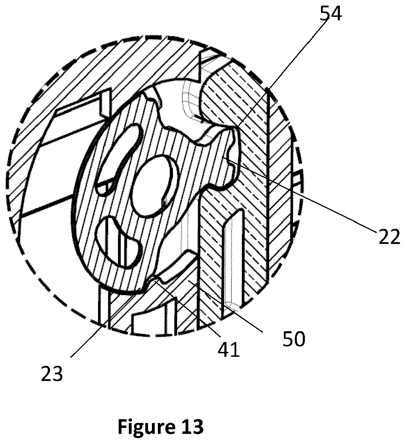

As shown in Figure 7b, when the lever 5 is in the open position, also referred to as pre-lock position, the gear tooth 22 is configured to engage with a protruding member 41 e.g. a node on surface 50 of the connector housing 2. It will be appreciated that the term engages means that the lever arms 6,7 may be mounted on the connector housing 2, such that the gear mechanism 18 is provided at an orientation to the protruding member 41 as shown in Figure 7b . In order for the gear mechanism 18 to rotate, such that the lever moves from the pre-lock position to the final-lock position, a suitable force is applied to the gear mechanism 18 via the lever 5 causing the gear tooth 22 to move over the protruding surface 41 towards the closed position. The surface 50 may be provided with a concave surface, thus allowing the gear mechanism 18 to rotate to the closed position, whereby the gear tooth 22 is configured to engage with a corresponding mating surface of the counter connector housing 4, and the node 41 engages with a corresponding surface 23 of the gear member 18 as shown in Figure 13.

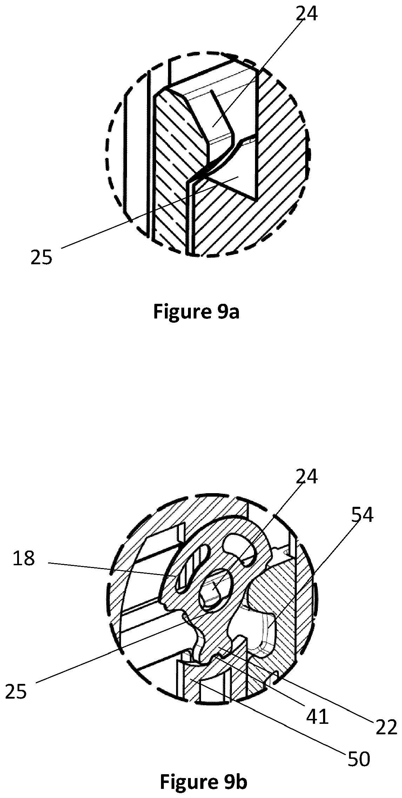

Figure 9a and 9b illustrate the mating sequence of the connector 2 and the counter connector 4. As shown, the counter connector 4 is configured to engage with the connector housing 2 via corresponding engagement surfaces 24 and 25. For example, the counter connector 4 may be provided with one or more bosses or protrusions, which are configured to engage with corresponding mating surfaces 25 e.g. openings, channels and the like, provided on the connector housing 2 and/or the locking member 16a and 16b of the lever arms 6 and 7, as shown in Figure 9a and 9b.

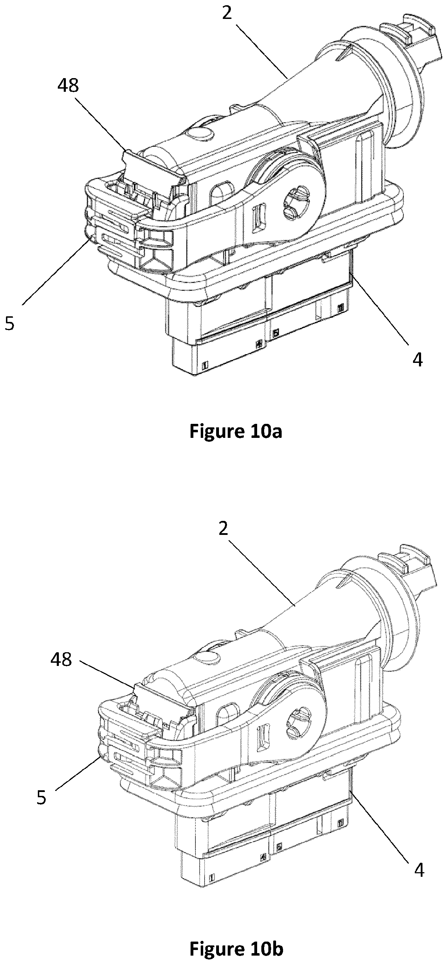

Figures 10a and 10b illustrate the connector assembly with the lever 5 in the closed position, also referred to as the final-lock position. A shown, a connector position assurance (CPA) member 48 may be provided and secured in a location between the lever 5 and the connector housing 2. The CPA member 48 is configured to be activated after the lever 5 has been rotated from the open to the closed position. The insertion of the CPA member 48 ensures that the lever 5 is prevented from accidentally rotated away from the closed position during use. Should the need arise to reverse the mating of the connector housing 2 and the counter connector housing 4 the CPA must be purposefully removed from the connector assembly 100 in order to enable the rotation of the lever 5.

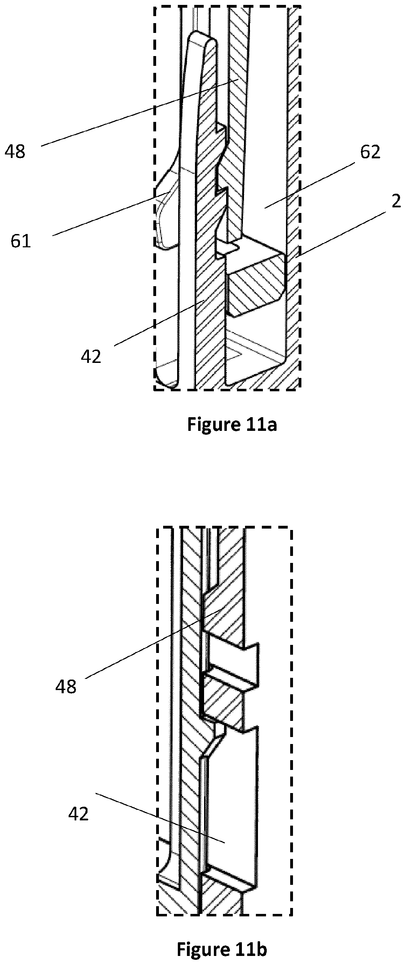

The CPA member 48 comprises geometrical features 62 which are configured to engage with corresponding features 47 in the lever 5 as shown in Figures 11a to 12e. In use, the CPA member 48 is slotted into the space 62 formed between the second connecting means 42 of the connector housing 2 and the main body of the connector housing 2. For example, behind the second connecting means 42, an opening may be provided for inserting the CPA member 48. As shown, the CPA member comprises engagement members 61 configured to engage with corresponding engagement members 47 of first connecting mechanism 40 of the lever 5. The CPA member 48 is movable between a start position, and a stop position.

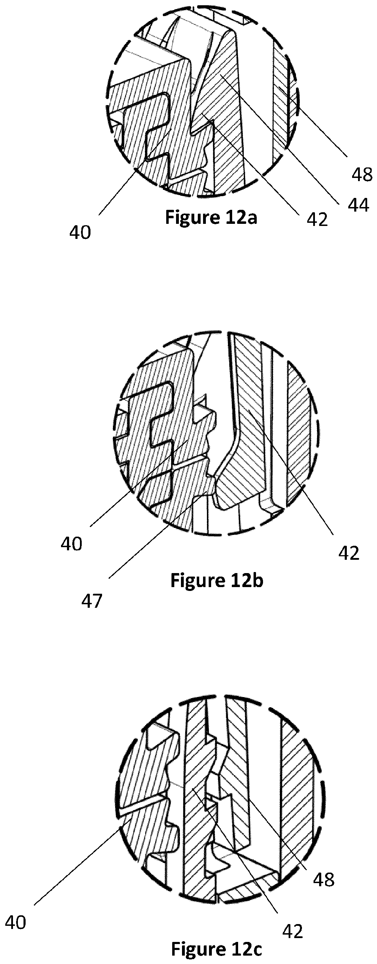

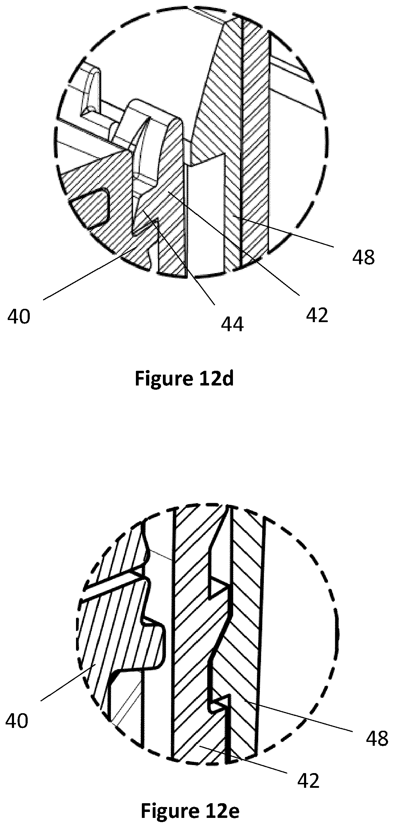

As shown in Figure 12a and 12b, with the CPA member in the start position, when the lever is positioned at the closed state, the first connecting means 40 and the second connecting means 42 are configured to engage. For example, the first and second connecting means 40 and 42 may be provided with corresponding engagement elements 44 e.g. in the form of a latch and a corresponding mating surface. Once, the first and second connecting means are engaged, the CPA member 48 is moved from the start position to the end position as shown in Figures 12c to 12e. At the end position, the CPA member 48 exerts a retaining force on the second connecting mechanism 42, and such as accidental movement of the lever is prevented.

Figure 13 shows a cross-sectional perspective view of the connector assembly with the lever 5 in the closed position. As shown, the gear tooth 22 of the gear mechanism engages with a recess on a mating surface 54 of the counter connector housing 4. As such, the counter connector housing 4 is securely connected to the connector housing 2.

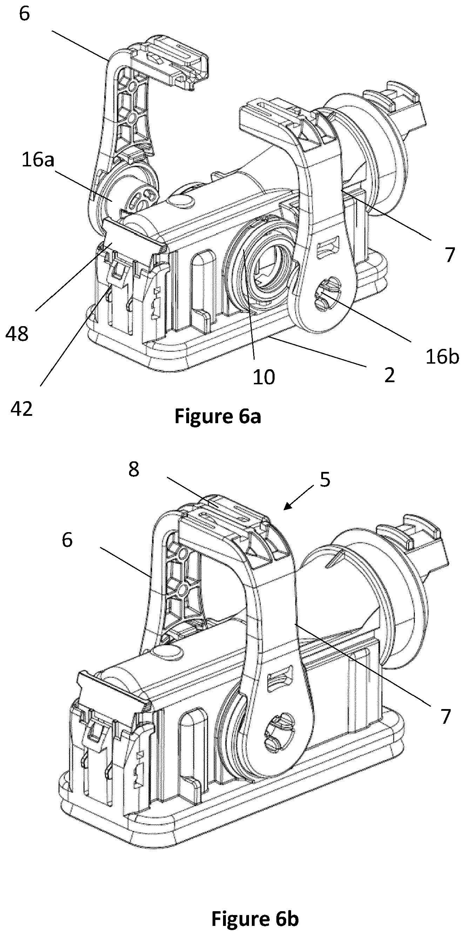

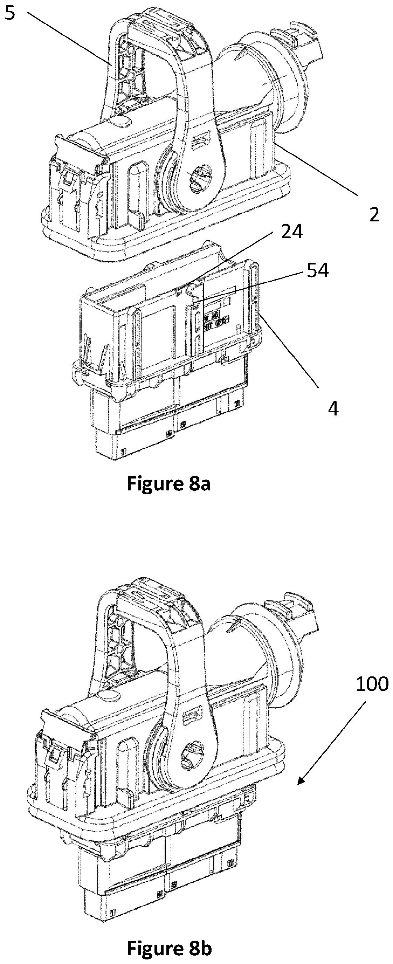

An exemplified method for the connector assembly is described below to illustrate the sequence of activation of the features of the connector assembly with references to figures 6a, 6b, 8a, and 8b:
As shown in Figure 6a the lever arms 6 and 7 are presented at opposing mounting locations on the connector housing 2. Each lever arm 6 and 7 is mounted to the connector housing 2 via the respective first and second mounting means 9 and 10 as described above and the corresponding interlocking means 8 are connected to one another, thereby forming the lever 5. With the lever 5 mounted on the connector housing 2, the retaining latch 9 is engaged with a notch 26 in the connector housing 2 as shown in figure 6b. As the notch 26 in the connector housing 2 forms an arcuate path as described above, the retaining latch 9 is free to rotate without accidentally becoming disengaged, for example to move along the arcuate notch. The sealing member 12 is located on the connector housing 2. In use, when the lever 5 is mounted on the connector housing 2, the sealing member 12 is in sealing contact with both the lever 5 and the connector housing 2. As the sealing member 12 is ring shaped and it sits within a sealing area 11 in the mounting means 8, it does not prohibit rotational movement of the lever 5 in relation to the connector housing 2. As shown in Figure 8a, the counter connector 4 is presented to the connector housing 2. The connector housing 2 and the counter connector housing 4 may be brought into engagement such that a portion of the counter connector housing 4 is located inside a portion of the connector housing 2 as shown in Figure 8b. A boss 24, or another engagement element, may be provided on the counter connector housing 4 which cooperates with a corresponding mating surface 25 of the gear as shown in Figure 9a and 9b. The geometry of the mating surface 25 is such that it allows the boss 24 to rotate within the space defined by the mating surface 25 without disengaging from the mating surface 25. As the lever 5 is rotated from the open position, in which it is assembled on the connector housing 2, to a closed position, the connector housing 2 and the counter connector housing 4 are coupled to one another via the rotatable gear member 18 provided at each lever arm 6 and 7. As such, the lever 5 acts as a mate-assist device,. as it is known in the art, configured to coupling the two connector housings 2 and 4. , When the lever 5 reaches the closed position, the at least one tooth of the gear 22 engages with a mating surface 54 such that further motion of the gear 18, either clockwise or anticlockwise, is discouraged. In addition, when the lever 5 reaches the closed position a first connecting means 40 on the lever engages with a second connecting means 42 on the connector housing, further strengthening the engagement between the lever 5 and the connector housing 2. A CPA member 48 is additionally inserted at this point, which is wedged between the second connecting means 42 and the connector housing 2 such that the first connecting means 40 and the second connecting means 42 cannot disengage from one another.

## Claims

1. A connector assembly (100) comprising:
a connector housing (2) adapted to engage with a corresponding counter connector housing (4);
a lever (5) comprising a first lever arm (6) and a second lever arm (7), each lever arm (6,7) comprising interlocking means (8) for connecting the first lever arm (6) to the second lever arm (7) at a first location, wherein the first lever arm and the second lever arm are identical,
each lever arm (6, 7) comprising at a second location a first mounting member (9) configured to cooperate with a complementary second mounting member (10) on the connector housing (2) for pivotably and sealingly mounting each lever arm (6,7) to a corresponding location on the connector housing (2);
wherein the interlocking means (8) of each of the first lever arm (6) and the second lever arm (7) are configured to define complementary symmetrical surfaces that interlock with one another when the lever arms (6,7) are pivotably mounted to the connector housing (2) and, wherein on mounting the lever arms (6, 7) to the connector housing (2), the lever (5) is configured to move about the connector housing (2) between an open state and a closed state to secure the counter connector housing (4) to the connector housing (2).

2. The connector assembly (100) of claim 1, wherein a sealing member (12) is provided in sealing contact with corresponding sealing surfaces (11, 21) on the lever arms (6, 7) and the connector housing (2).

3. The connector assembly (100) of any one of the preceding claims, wherein the connector housing (2) comprises two apertures (14a, 14b) provided on opposing sides of the connector housing (2), each aperture (14a, 14b) configured to receive a locking member (16a, 16b) of a lever arm (6, 7).

4. The connector assembly (100) of claim 3, wherein the locking member (16a, 16b) comprises a locking element (18) which is configured to cooperate, when the lever (5) moves to the closed state, with a mating surface (54) of the counter connector housing (4) to secure the counter connector housing (4) to the connector housing (2).

5. The connector assembly (100) of claim 4, wherein the locking element (18) is in the form of a gear (18) comprising at least one gear tooth (22) configured to engage with a recess (54) on the counter connector housing (4).

6. The connector assembly (100) of any one of the preceding claims, wherein the first and second mounting members (9, 10) comprise one of a retaining member (9) and a notch (26) adapted to cooperate with one another for mounting each lever arm (6,7) to opposing locations on the connector housing (2).

7. The connector assembly (100) of any preceding claim, wherein the counter connector housing (4) comprises one or more engagement surfaces adapted to cooperate with one or more corresponding engagement surfaces (25) on the connector housing (2) or the lever arms (6, 7).

8. The connector assembly (100) of any one of the preceding claims, wherein the interlocking means (8) of each lever arm (6, 7) comprise a locking element (28) and a guiding element (30).

9. The connector assembly (100) of claim 8, wherein the guiding element (30) of each lever arm (6, 7) comprises a protruding elongate member (32) and a corresponding slot (34), wherein the corresponding slot (34) is configured for receiving the elongated member (32) of the other lever arm (6, 7).

10. The connector assembly (100) of claim 8 or 9, wherein the locking element (28) of each lever arm (6, 7) comprises a protruding locking member (36) and a corresponding resilient member (38) which defines a locking aperture configured for receiving and securing the protruding locking member (36) of the other lever arm (6,7).

11. The connector assembly (100) of any one of the preceding claims, wherein the lever (5) comprises first connecting means (40) configured to cooperate with corresponding second connecting means (42) on the connector housing (2) for releasably securing the lever (5) on the connector housing (2), when the lever is in the closed state, wherein the first connecting means (40) and second connecting means (42) each comprising interconnecting elements (44) configured to engage with one another.

12. The connector assembly (100) of claim 11, wherein the connector assembly comprises a connector position assurance (CPA) member (48), the CPA member (48) being movable from a start position to an end position, wherein at the end position the CPA member (48) is adapted to prevent the interconnecting elements (44) from disengaging.

13. The connector assembly (100) of any preceding claim, wherein the first lever arm (6) and the second lever arm (7) are substantially symmetrical.

14. The connector assembly of any preceding claim, wherein the lever arms (6,7) are made of a glass fiber reinforced thermoplastic material comprising between 20.0 % to 50.0 % of fiber content.

15. A method for assembling an electrical connector (100), the electrical connector comprising a connector housing (2), a corresponding counter connector housing (4), and a lever (5) comprising a first lever arm (6) and a second lever arm (7), each lever arm (6,7) comprising interlocking means (8) configured to define complementary symmetrical surfaces that interlock with one another when the lever arms (6,7) are pivotably mounted to the connector housing (2) for connecting the first lever arm (6) to the second lever arm (7) at a first location, wherein the first lever arm and the second lever arm are identical, the method comprising the steps of:
o Presenting the first lever arm (6) and the second lever arm (7) to the connector housing (2) on opposite sides thereof;
o Biasing the interlocking means (8) of each arm towards the interlocking means of the other arm to effect an interlock of the first and second arms, the interlock effecting a sealed connection of the lever arms to the connector housing;
o Engaging the connector housing with the corresponding counter connector housing (4);
o Pivoting the lever (5) relative to the connector housing (2) to effect a locking of the connector housing (2) with the corresponding counter connecting housing (4).

## Patentansprüche

1. Eine Verbinderanordnung (100), die Folgendes beinhaltet:
ein Verbindergehäuse (2), das angepasst ist, um in ein entsprechendes Gegenverbindergehäuse (4) einzugreifen;
einen Hebel (5), der einen ersten Hebelarm (6) und einen zweiten Hebelarm (7) beinhaltet, wobei jeder Hebelarm (6, 7) ein Verriegelungsmittel (8) zum Verbinden des ersten Hebelarms (6) mit dem zweiten Hebelarm (7) an einer ersten Stelle beinhaltet,
wobei der erste Hebelarm und der zweite Hebelarm baugleich sind,
wobei jeder Hebelarm (6, 7) an einer zweiten Stelle ein erstes Anbringungselement (9) beinhaltet, das konfiguriert ist, um mit einem komplementären zweiten Anbringungselement (10) auf dem Verbindergehäuse (2) zusammenzuwirken, um jeden Hebelarm (6, 7) schwenkbar und abdichtend an einer entsprechenden Stelle an dem Verbindergehäuse (2) anzubringen;
wobei das Verriegelungsmittel (8) von jedem von dem ersten Hebelarm (6) und dem zweiten Hebelarm (7) konfiguriert ist, um komplementäre symmetrische Flächen zu definieren, die sich miteinander verriegeln, wenn die Hebelarme (6, 7) schwenkbar an dem Verbindergehäuse (2) angebracht werden, und wobei bei Anbringung der Hebelarme (6, 7) an dem Verbindergehäuse (2) der Hebel (5) konfiguriert ist, um sich zwischen einem offenen Zustand und einem geschlossenen Zustand um das Verbindergehäuse (2) zu bewegen, um das Gegenverbindergehäuse (4) an dem Verbindergehäuse (2) zu sichern.

2. Verbinderanordnung (100) gemäß Anspruch 1, wobei ein Abdichtungselement (12) in abdichtendem Kontakt mit entsprechenden Abdichtungsflächen (11, 21) auf den Hebelarmen (6, 7) und dem Verbindergehäuse (2) bereitgestellt ist.

3. Verbinderanordnung (100) gemäß einem der vorhergehenden Ansprüche, wobei das Verbindergehäuse (2) zwei Öffnungen (14a, 14b) beinhaltet, die auf entgegengesetzten Seiten des Verbindergehäuses (2) bereitgestellt sind, wobei jede Öffnung (14a, 14b) konfiguriert ist, um ein Sperrelement (16a, 16b) eines Hebelarms (6, 7) aufzunehmen.

4. Verbinderanordnung (100) gemäß Anspruch 3, wobei das Sperrelement (16a, 16b) eine Sperrkomponente (18) beinhaltet, die konfiguriert ist, um, wenn sich der Hebel (5) in den geschlossenen Zustand bewegt, mit einer Passfläche (54) des Gegenverbindergehäuses (4) zusammenzuwirken, um das Gegenverbindergehäuse (4) an dem Verbindergehäuse (2) zu sichern.

5. Verbinderanordnung (100) gemäß Anspruch 4, wobei die Sperrkomponente (18) in der Form eines Zahnrads (18) vorliegt, das mindestens einen Zahnradzahn (22) beinhaltet, der konfiguriert ist, um in eine Aussparung (54) an dem Gegenverbindergehäuse (4) einzugreifen.

6. Verbinderanordnung (100) gemäß einem der vorhergehenden Ansprüche, wobei das erste und das zweite Anbringungselement (9, 10) eines von einem Halteelement (9) und einer Kerbe (26) beinhalten, die angepasst sind, um miteinander zusammenzuwirken, um jeden Hebelarm (6, 7) an entgegengesetzten Stellen auf dem Verbindergehäuse (2) anzubringen.

7. Verbinderanordnung (100) gemäß einem der vorhergehenden Ansprüche, wobei das Gegenverbindergehäuse (4) eine oder mehrere Eingriffsflächen beinhaltet, die angepasst sind, um mit einer oder mehreren entsprechenden Eingriffsflächen (25) auf dem Verbindergehäuse (2) oder den Hebelarmen (6, 7) zusammenzuwirken.

8. Verbinderanordnung (100) gemäß einem der vorhergehenden Ansprüche, wobei das Verriegelungsmittel (8) jedes Hebelarms (6, 7) eine Sperrkomponente (28) und eine Führungskomponente (30) beinhaltet.

9. Verbinderanordnung (100) gemäß Anspruch 8, wobei die Führungskomponente (30) jedes Hebelarms (6, 7) ein vorstehendes längliches Element (32) und eine entsprechende Vertiefung (34) beinhaltet, wobei die entsprechende Vertiefung (34) konfiguriert ist, um das längliche Element (32) des anderen Hebelarms (6, 7) aufzunehmen.

10. Verbinderanordnung (100) gemäß Anspruch 8 oder 9, wobei die Sperrkomponente (28) jedes Hebelarms (6, 7) ein vorstehendes Sperrelement (36) und ein entsprechendes elastisches Element (38), das eine Sperröffnung definiert, die zum Aufnehmen und Sichern des vorstehenden Sperrelements (36) des anderen Hebelarms (6, 7) konfiguriert ist, beinhaltet.

11. Verbinderanordnung (100) gemäß einem der vorhergehenden Ansprüche, wobei der Hebel (5) ein erstes Verbindungsmittel (40) beinhaltet, das konfiguriert ist, um mit einem entsprechenden zweiten Verbindungsmittel (42) auf dem Verbindergehäuse (2) zusammenzuwirken, um den Hebel (5) lösbar an dem Verbindergehäuse (2) zu sichern, wenn sich der Hebel in dem geschlossenen Zustand befindet, wobei das erste Verbindungsmittel (40) und das zweite Verbindungsmittel (42) jeweils Verbindungskomponenten (44) beinhalten, die konfiguriert sind, um ineinander einzugreifen.

12. Verbinderanordnung (100) gemäß Anspruch 11, wobei die Verbinderanordnung ein Element (48) zur Verbinderpositionssicherung (CPA) beinhaltet, wobei das CPA-Element (48) aus einer Startposition in eine Endposition bewegbar ist, wobei das CPA-Element (48) in der Endposition angepasst ist, um eine Trennung der Verbindungskomponenten (44) zu verhindern.

13. Verbinderanordnung (100) gemäß einem der vorhergehenden Ansprüche, wobei der erste Hebelarm (6) und der zweite Hebelarm (7) im Wesentlichen symmetrisch sind.

14. Verbinderanordnung gemäß einem der vorhergehenden Ansprüche, wobei die Hebelarme (6, 7) aus einem glasfaserverstärkten thermoplastischen Material gefertigt sind, das einen Fasergehalt von zwischen 20,0 % und 50,0 % beinhaltet.

15. Ein Verfahren zum Zusammenbauen eines elektrischen Verbinders (100), wobei der elektrische Verbinder ein Verbindergehäuse (2), ein entsprechendes Gegenverbindergehäuse (4) und einen Hebel (5), der einen ersten Hebelarm (6) und einen zweiten Hebelarm (7) beinhaltet, beinhaltet, wobei jeder Hebelarm (6, 7) ein Verriegelungsmittel (8) beinhaltet, das konfiguriert ist, um komplementäre symmetrische Flächen zu definieren, die sich miteinander verriegeln, wenn die Hebelarme (6, 7) schwenkbar an dem Verbindergehäuse (2) befestigt werden, um den ersten Hebelarm (6) mit dem zweiten Hebelarm (7) an einer ersten Stelle zu verbinden, wobei der erste Hebelarm und der zweite Hebelarm baugleich sind, wobei das Verfahren die folgenden Schritte beinhaltet:
o Heranführen des ersten Hebelarms (6) und des zweiten Hebelarms (7) an das Verbindergehäuse (2) an entgegengesetzten Seiten davon;
o Vorspannen des Verriegelungsmittels (8) jedes Arms in Richtung des Verriegelungsmittels des anderen Arms, um eine Verriegelung des ersten und zweiten Arms herbeizuführen, wobei die Verriegelung eine abgedichtete Verbindung der Hebelarme mit dem Verbindergehäuse herbeiführt;
o In-Eingriff-Bringen des Verbindergehäuses mit dem entsprechenden Gegenverbindergehäuse (4);
o Schwenken des Hebels (5) relativ zu dem Verbindergehäuse (2), um ein Sperren des Verbindergehäuses (2) mit dem entsprechenden Gegenverbindergehäuse (4) herbeizuführen.

## Revendications

1. Un assemblage formant connecteur (100) comprenant :
un boîtier de connecteur (2) conçu pour se mettre en engagement avec un boîtier de contre-connecteur (4) correspondant ;
un levier (5) comprenant un premier bras de levier (6) et un deuxième bras de levier (7), chaque bras de levier (6, 7) comprenant un moyen de verrouillage réciproque (8) pour connecter le premier bras de levier (6) au deuxième bras de levier (7) au niveau d'un premier emplacement, le premier bras de levier et le deuxième bras de levier étant identiques,
chaque bras de levier (6, 7) comprenant, au niveau d'un deuxième emplacement, un premier élément de montage (9) configuré pour coopérer avec un deuxième élément de montage (10) complémentaire sur le boîtier de connecteur (2) pour monter de façon à pouvoir pivoter et de façon scellable chaque bras de levier (6, 7) sur un emplacement correspondant sur le boîtier de connecteur (2) ;
dans lequel le moyen de verrouillage réciproque (8) de chaque bras parmi le premier bras de levier (6) et le deuxième bras de levier (7) est configuré pour définir des surfaces symétriques complémentaires qui se verrouillent réciproquement l'une avec l'autre lorsque les bras de levier (6, 7) sont montés de façon à pouvoir pivoter sur le boîtier de connecteur (2) et dans lequel, lors du montage des bras de levier (6, 7) sur le boîtier de connecteur (2), le levier (5) est configuré pour se déplacer autour du boîtier de connecteur (2) entre un état ouvert et un état fermé afin d'assujettir le boîtier de contre-connecteur (4) au boîtier de connecteur (2).

2. L'assemblage formant connecteur (100) de la revendication 1, dans lequel un élément de scellement (12) est fourni de manière à être en contact par scellement avec des surfaces de scellage (11, 21) correspondantes sur les bras de levier (6, 7) et le boîtier de connecteur (2).

3. L'assemblage formant connecteur (100) de n'importe laquelle des revendications précédentes, dans lequel le boîtier de connecteur (2) comprend deux ouvertures (14a, 14b) fournies sur des côtés opposés du boîtier de connecteur (2), chaque ouverture (14a, 14b) étant configurée pour recevoir un élément de verrouillage (16a, 16b) d'un bras de levier (6, 7).

4. L'assemblage formant connecteur (100) de la revendication 3, dans lequel l'élément de verrouillage (16a, 16b) comprend un élément de verrouillage (18) qui est configuré pour coopérer, lorsque le levier (5) se déplace jusqu'à l'état fermé, avec une surface d'accouplement (54) du boîtier de contre-connecteur (4) afin d'assujettir le boîtier de contre-connecteur (4) au boîtier de connecteur (2).

5. L'assemblage formant connecteur (100) de la revendication 4, dans lequel l'élément de verrouillage (18) se présente sous la forme d'un engrenage (18) comprenant au moins une dent d'engrenage (22) configurée pour se mettre en engagement avec un renfoncement (54) sur le boîtier de contre-connecteur (4).

6. L'assemblage formant connecteur (100) de n'importe laquelle des revendications précédentes, dans lequel les premier et deuxième éléments de montage (9, 10) comprennent un organe parmi un élément de retenue (9) et une encoche (26) conçus pour coopérer l'un avec l'autre pour monter chaque bras de levier (6, 7) sur des emplacements opposés sur le boîtier de connecteur (2).

7. L'assemblage formant connecteur (100) de n'importe quelle revendication précédente, dans lequel le boîtier de contre-connecteur (4) comprend une ou plusieurs surfaces de mise en engagement conçues pour coopérer avec une ou plusieurs surfaces de mise en engagement (25) correspondantes sur le boîtier de connecteur (2) ou les bras de levier (6, 7).

8. L'assemblage formant connecteur (100) de n'importe laquelle des revendications précédentes, dans lequel les moyens de verrouillage réciproque (8) de chaque bras de levier (6, 7) comprennent un élément de verrouillage (28) et un élément de guidage (30).

9. L'assemblage formant connecteur (100) de la revendication 8, dans lequel l'élément de guidage (30) de chaque bras de levier (6, 7) comprend un élément allongé (32) faisant saillie et une fente (34) correspondante, la fente (34) correspondante étant configurée pour recevoir l'élément allongé (32) de l'autre bras de levier (6, 7).

10. L'assemblage formant connecteur (100) de la revendication 8 ou de la revendication 9, dans lequel l'élément de verrouillage (28) de chaque bras de levier (6, 7) comprend un élément de verrouillage (36) faisant saillie et un élément élastique (38) correspondant qui définit une ouverture de verrouillage configurée pour recevoir et assujettir l'élément de verrouillage (36) faisant saillie de l'autre bras de levier (6, 7).

11. L'assemblage formant connecteur (100) de n'importe laquelle des revendications précédentes, dans lequel le levier (5) comprend un premier moyen de raccordement (40) configuré pour coopérer avec un deuxième moyen de raccordement (42) correspondant sur le boîtier de connecteur (2) pour assujettir de façon libérable le levier (5) sur le boîtier de connecteur (2), lorsque le levier est dans l'état fermé, le premier moyen de raccordement (40) et le deuxième moyen de raccordement (42) comprenant chacun des éléments de raccordement réciproque (44) configurés pour se mettre en engagement l'un avec l'autre.

12. L'assemblage formant connecteur (100) de la revendication 11, l'assemblage formant connecteur comprenant un élément d'assurance de position de connecteur (CPA) (48), l'élément CPA (48) pouvant se déplacer d'une position de départ à une position de fin, dans lequel au niveau de la position de fin, l'élément CPA (48) est conçu pour empêcher les éléments de raccordement réciproque (44) de se désengager.

13. L'assemblage formant connecteur (100) de n'importe quelle revendication précédente, dans lequel le premier bras de levier (6) et le deuxième bras de levier (7) sont substantiellement symétriques.

14. L'assemblage formant connecteur de n'importe quelle revendication précédente, dans lequel les bras de levier (6, 7) sont réalisés en un matériau thermoplastique renforcé par des fibres de verre comprenant une teneur en fibres d'entre 20,0 % et 50,0 %.

15. Un procédé pour assembler un connecteur électrique (100), le connecteur électrique comprenant un boîtier de connecteur (2), un boîtier de contre-connecteur (4) correspondant, et un levier (5) comprenant un premier bras de levier (6) et un deuxième bras de levier (7), chaque bras de levier (6, 7) comprenant un moyen de verrouillage réciproque (8) configuré pour définir des surfaces symétriques complémentaires qui se verrouillent réciproquement l'une avec l'autre lorsque les bras de levier (6, 7) sont montés de façon à pouvoir pivoter sur le boîtier de connecteur (2) pour connecter le premier bras de levier (6) au deuxième bras de levier (7) au niveau d'un premier emplacement, le premier bras de levier et le deuxième bras de levier étant identiques, le procédé comprenant les étapes consistant :
o à présenter le premier bras de levier (6) et le deuxième bras de levier (7) par rapport au boîtier de connecteur (2) sur des côtés opposés de celui-ci ;
o à solliciter le moyen de verrouillage réciproque (8) de chaque bras vers le moyen de verrouillage réciproque de l'autre bras afin d'effectuer un verrouillage réciproque des premier et deuxième bras, le verrouillage réciproque effectuant un raccordement scellé des bras de levier par rapport au boîtier de connecteur ;
o à mettre en engagement le boîtier de connecteur avec le boîtier de contre-connecteur (4) correspondant ;
o à faire pivoter le levier (5) relativement au boîtier de connecteur (2) afin d'effectuer un verrouillage du boîtier de connecteur (2) avec le boîtier de contre-connecteur (4) correspondant.
